# FASCICULE DE BREVET EUROPEEN

(11) **EP 3 520 659 B1**
(45) Date de publication et mention de la délivrance du brevet: **24.03.2021**
(21) Numéro de dépôt: 19154043.4
(22) Date de dépôt: 28.01.2019
(51) Int. Cl.: A47J 31/54, A47J 31/56

(54) **MACHINE DE PRÉPARATION DE BOISSONS MUNIE D'UNE CHAUDIÈRE AMELIORÉE**
MASCHINE ZUR GETRÄNKEZUBEREITUNG, DIE MIT EINEM VERBESSERTEN HEIZKESSEL AUSGESTATTET IST
MACHINE FOR PREPARING BEVERAGES PROVIDED WITH AN IMPROVED BOILER

(30) Priorité: 02.02.2018 FR 1850907
(43) Date de publication de la demande: 07.08.2019
(73) Titulaire: SEB S.A., 69130 Ecully (FR)
(72) Inventeur: HIRON, Frédéric, 72130 SAINT OUEN DE MIMBRE (FR); BIENVENU, Denis, 53370 SAINT PIERRE DES NIDS (FR); VAUGEOIS, Sylvain, 53000 LAVAL (FR)
(74) Mandataire: SEB Développement

(56) Documents cités:
- WO-A1-2017/191529
- US-A- 4 602 145
- US-A1- 2008 271 608
- US-A1- 2016 287 010
- US-B2- 9 462 911

## Description

La présente invention se rapporte au domaine technique général des machines de préparation de boissons infusées, notamment des machines à café automatiques comportant une chaudière pour la production d'eau chaude.

Il est connu du document FR2802073 un groupe d'infusion pour une machine de préparation de boissons infusées comportant des moyens de pompage d'eau à partir d'un réservoir pour l'envoyer à travers une chaudière instantanée dans une chambre d'infusion contenant un produit à infuser, puis l'évacuer sous forme d'infusion à l'extérieur de la chambre, ladite chaudière comportant un corps cylindrique intégrant un élément chauffant électrique et un conduit d'eau. Le conduit d'eau et l'élément chauffant forment deux hélices enroulées autour d'un axe longitudinal du corps de la chaudière. Le conduit d'eau est surmoulé avec l'élément chauffant pour former le corps de la chaudière et la chambre d'infusion est surmoulée avec le corps de la chaudière.

Dans la chaudière de cette machine de préparation de boissons, l'implantation d'un capteur de température pour mesurer la température de l'eau entrant dans la chambre d'infusion est difficile pour obtenir une mesure fiable.

En effet, l'élément chauffant est réparti régulièrement sur la surface extérieure du corps et le capteur de température serait donc agencé à proximité de l'élément chauffant. Ainsi, il serait plus influencé par la température émise par l'élément chauffant que par la température de l'eau circulant dans le conduit d'eau.

On connait également du document WO2017191529 une machine de préparation de boissons infusées.

Le but de la présente invention est de remédier aux inconvénients précités et de proposer une machine de préparation de boissons infusées qui présente un fonctionnement fiable et un bon résultat en tasse, notamment au niveau de la température de la boisson infusée.

Un autre but de la présente invention est de proposer une machine de préparation de boissons qui présente une conception simple et qui soit économique à mettre en œuvre.

Ces buts sont atteints avec une machine de préparation de boissons infusées telle que définie dans la revendication 1.

Ainsi, le capteur de température est implanté dans une zone exempte d'élément chauffant suffisamment importante pour que le capteur de température mesure la température de l'eau circulant dans le conduit d'eau en étant peu influencé par les calories émises par l'élément chauffant.

Par le capteur de température est entouré par une zone circulaire périphérique de diamètre D, on considère que le capteur de température est entouré par une sphère de diamètre D.

Par chaudière instantanée, on comprend une chaudière qui comporte un élément chauffant qui amène et maintient un tube à eau à une température prédéterminée. Une fois la préchauffe du tube à eau réalisée, la chaudière transforme instantanément l'eau froide qui parcourt le tube à eau en eau chaude.

De manière avantageuse, le diamètre D est supérieur au diamètre DC.

La demanderesse a mis en évidence que lorsque le diamètre D est supérieur au diamètre DC, le capteur de température mesure de manière précise la température de l'eau circulant dans le conduit d'eau.

De préférence, le capteur de température est agencé sur le cylindre de diamètre DC.

Ainsi, le capteur de température est agencé au plus près du conduit d'eau.

De manière avantageuse, la distance E entre une paroi externe de la tubulure d'extrémité de sortie d'eau et le capteur de température est inférieure à 5 millimètres, de préférence inférieure à 3 millimètres.

Ainsi, le capteur de température est agencé dans une zone affinée du corps pour être au plus près de la tubulure d'extrémité de sortie d'eau.

Avantageusement, la surface de révolution autour de laquelle l'élément chauffant est formé est un cylindre de diamètre DE.

L'élément chauffant et le conduit d'eau sont formés autour de cylindres. Ainsi, l'élément chauffant peut être agencé autour et à proximité du conduit d'eau pour un bon échange thermique.

De manière avantageuse, l'élément chauffant est réparti sur sensiblement toute la hauteur du corps.

De préférence, l'élément chauffant comporte un plan de symétrie P qui comprend l'axe longitudinal V et qui passe par le capteur de température.

Ainsi, le capteur de température peut être positionné de manière équilibrée au sein de l'élément chauffant pour définir la zone circulaire périphérique.

De manière avantageuse, le plan P ne coupe qu'une seule fois l'élément chauffant.

Une telle disposition permet un agencement de l'élément chauffant sur les cotés et sur l'arrière du corps, en considérant que le capteur de température est agencé sur l'avant du corps.

De préférence, ledit élément chauffant comporte des terminaisons qui sont rectilignes et orientées selon la tangente au diamètre DE du cylindre et dans un plan de projection perpendiculaire à l'axe longitudinal V, le capteur de température est agencé de manière centrée entre les terminaisons de l'élément chauffant.

Une telle disposition permet de positionner de manière équilibrée le capteur de température entre les terminaisons de l'élément chauffant.

De préférence, les terminaisons de l'élément chauffant sont agencées dans un plan perpendiculaire à l'axe longitudinal V situé à proximité de la cuve.

Ainsi, le capteur de température, agencé à proximité de la tubulure d'extrémité du conduit d'eau qui débouche dans un fond de la chambre d'infusion, est situé à proximité du plan dans lequel les terminaisons de l'élément chauffant sont agencées.

Avantageusement, le conduit d'eau est un tube métallique qui est surmoulé avec l'élément chauffant, pour former le corps de la chaudière.

De préférence, la chambre d'infusion comporte un corps qui est agencé dans le prolongement du corps de la chaudière, ledit corps de la chaudière et le corps de la chambre d'infusion étant réalisés ensemble lors de la même opération de surmoulage du conduit d'eau, de l'élément chauffant et de la chambre d'infusion.

Une telle disposition permet d'obtenir un ensemble chaudière/chambre d'infusion particulièrement compact et rigide. De plus, la chambre d'infusion est chauffée par l'élément chauffant par conduction et permet de maintenir la température de l'eau chaude traversant la chambre d'infusion pour produire du café.

L'invention sera mieux comprise à l'étude du mode de réalisation pris à titre nullement limitatif et illustré dans les figures annexées dans lesquelles :
- La figure 1 illustre une vue schématique d'une machine de préparation de boissons infusées avec, en perspective, une chaudière et une chambre d'infusion selon un mode particulier de réalisation de l'invention ;
- La figure 2 illustre une vue en perspective de la chaudière et de la chambre d'infusion illustrées sur la figure 1 sans une partie surmoulée du corps ;
- La figure 3 illustre une vue selon la direction III de la chaudière et de la chambre d'infusion illustrées sur la figure 2 ;
- La figure 4 illustre une vue selon la direction IV de la chaudière et de la chambre d'infusion illustrées sur la figure 2 ;
- La figure 5 illustre une vue en coupe selon la ligne V-V de la chaudière et de la chambre d'infusion illustrées sur la figure 3 ;
- La figure 6 illustre une vue schématique de l'élément chauffant de la chaudière et de la chambre d'infusion illustrées sur la figure 3, l'élément chauffant étant mis en forme dans un plan PS.

On notera que, dans ce document, les termes «horizontal», «vertical», « inférieur», «supérieur», «longitudinal», «transversal», «haut», «bas», employés pour décrire la machine de distribution de boissons font référence à cette machine reposant sur un plan de travail, en situation d'usage.

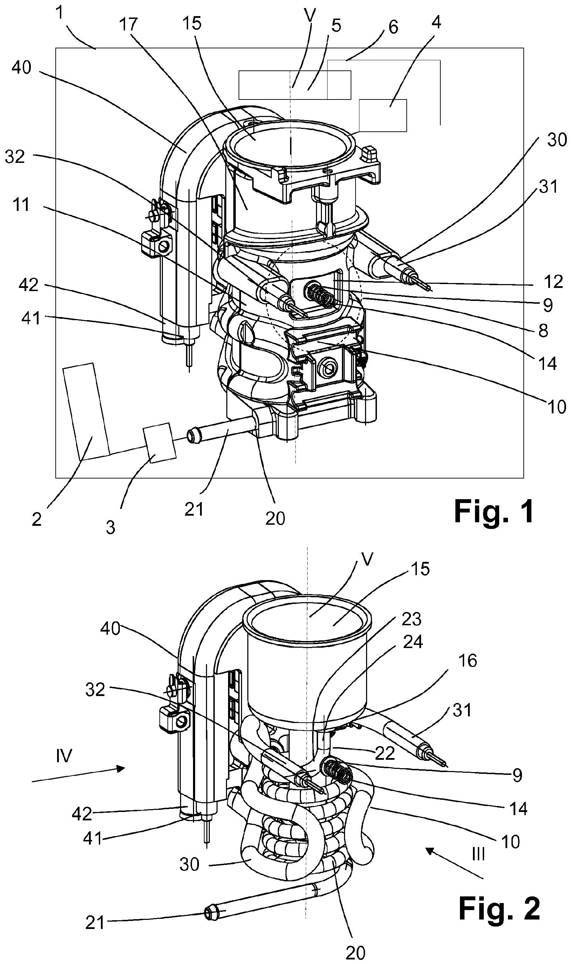

Dans l'exemple de réalisation représenté en partie schématiquement à la figure 1, la machine de préparation de boissons infusées est une machine à café 1 automatique apte à réaliser un café espresso. La machine à café 1 comporte un réservoir 2 formant une alimentation en eau froide et une pompe 3 électrique formant des moyens de pompage destinés à transférer l'eau du réservoir 2 vers un conduit d'eau 20 d'une chaudière 10. Le conduit d'eau 20 traverse la chaudière 10 pour déboucher dans un fond 16 d'une chambre d'infusion 15 (Fig.2). La chambre d'infusion 15 est destinée à recevoir de la mouture de café provenant d'un broyeur à café 4. La chambre d'infusion 15 est montée fixe au-dessus de la chaudière 10 dont elle constitue le prolongement. La chambre d'infusion 15 et la chaudière 10 présentent un axe longitudinal V. La chaudière 10 comporte un élément chauffant 30 et assure l'alimentation en eau chaude de la chambre d'infusion 15.

La chambre d'infusion 15 reçoit un piston presseur 5 qui coulisse selon un même axe vertical correspondant à l'axe longitudinal V de la chaudière 10 pour compacter la mouture de café à l'intérieur de la chambre d'infusion 10. La machine à café 1 comprend des moyens d'actionnement du piston presseur 5 (non représentés sur les figures) qui sont constitués, par exemple, par un vérin hydraulique pour faire passer le piston presseur 5 d'une position de repos (au-dessus de la chambre d'infusion 15) à une position de travail, en descendant verticalement en direction de la chambre d'infusion 15 pour comprimer la mouture. L'eau chaude est alors envoyée à travers la mouture et la boisson infusée est ensuite évacuée au travers du piston presseur 5 dans lequel est réalisé un conduit prolongé vers l'extérieur par un canal d'évacuation 6 qui oriente la boisson obtenue vers une tasse à l'extérieur de la machine à café 1. Un tel vérin et actionnement du piston presseur sont décrits dans le document WO 99/12457.

La machine à café 1 comporte une chaudière complémentaire 40 destinée à produire de la vapeur pour alimenter une buse (non représentée sur les figures) de sortie de vapeur qui peut être utilisée avec un accessoire pour cappuccino monté à son extrémité. La chaudière complémentaire 40 comporte un élément chauffant 41 agencé de manière adjacente à un conduit tubulaire 42 pour le passage de l'eau. L'élément chauffant 41 et le conduit tubulaire 42 présentent une forme en U.

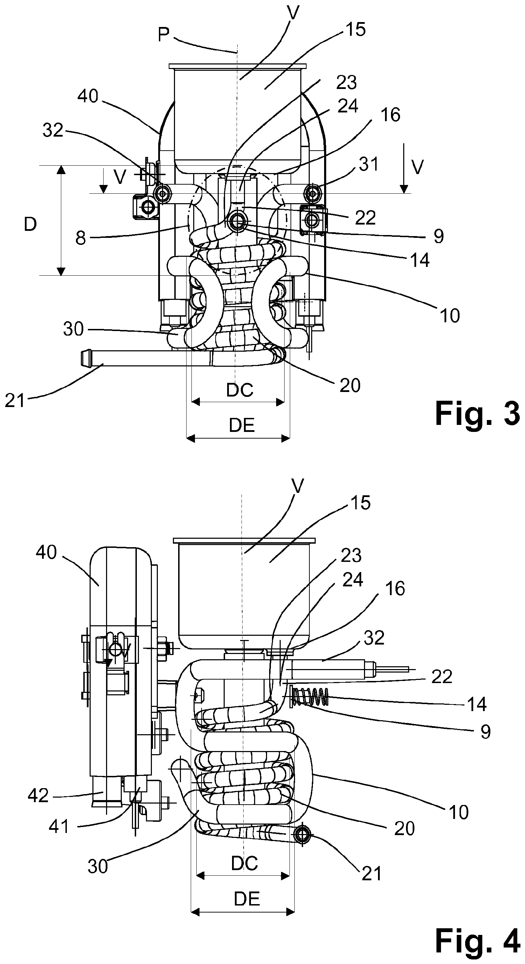

La chaudière 10 se présente sous la forme d'un bloc chauffant dont un corps 11 intègre le conduit d'eau 20 enroulé en hélice à l'intérieur d'un cylindre de diamètre DC (Fig. 3 à 5) et le long de l'axe longitudinal V de la chaudière 10, et l'élément chauffant 30 électrique formé autour d'un cylindre d'axe longitudinal V. La chambre d'infusion 15 comporte un corps 17 (Fig.1) qui est agencé dans le prolongement du corps 11 de la chaudière 10. Le corps 11 et le corps 17 sont réalisés en un alliage d'aluminium par injection dans un moule dans lequel auront été préalablement installés le conduit d'eau 20, l'élément chauffant 30 et la chambre d'infusion 15. Le corps 11 présente un diamètre compris entre 60 et 70 mm et a une hauteur (chambre d'infusion 15 comprise) d'environ 90 à 100 mm.

Le conduit d'eau 20 est un tube en acier inoxydable de longueur suffisante pour qu'il puisse réchauffer à une température prédéterminée l'eau le traversant. A titre d'exemple, sa longueur peut être comprise entre 500 et 700 mm. Ce tube est disposé à distance de l'élément chauffant 30, son hélice s'inscrivant, à titre d'exemple, dans un diamètre DC de 40 mm avec un pas de 12 mm. Le conduit d'eau 20 comporte une tubulure d'extrémité d'entrée d'eau 21 qui est rectiligne et est située en partie inférieure du corps 11, saillante par rapport à ce dernier. Le conduit d'eau 20 comporte une tubulure d'extrémité de sortie d'eau 22 qui présente un coude 23 (Fig.3) puis une partie rectiligne 24 qui débouche dans le fond 16 de la chambre d'infusion 15, de manière excentrée par rapport à l'axe longitudinal V.

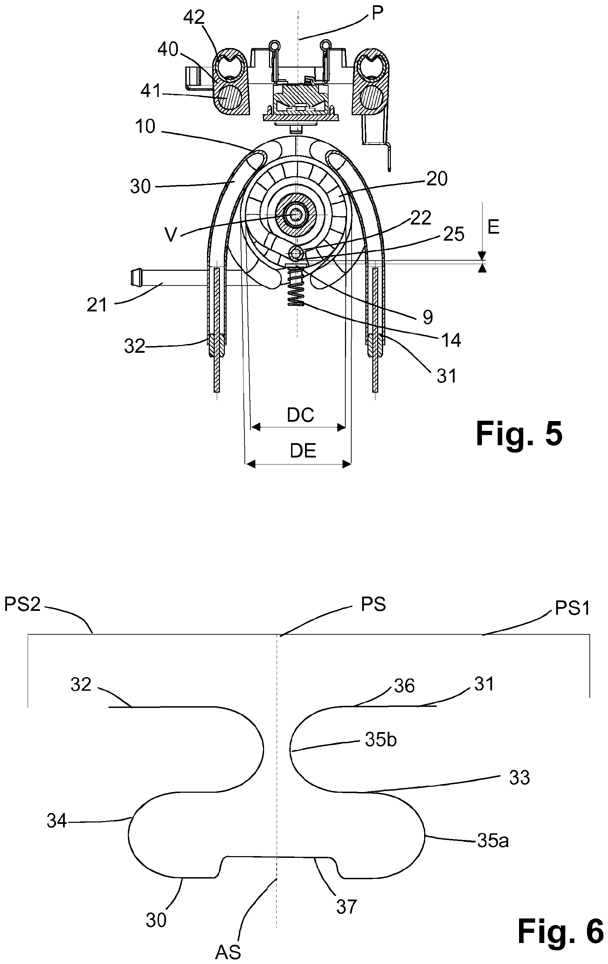

La machine à café 1 comporte un capteur de température 9 agencé sur le corps 11, dans un logement 12 (Fig.1), en vis-à-vis de la tubulure d'extrémité de sortie d'eau 22 du conduit d'eau 20 (Fig.4). Le capteur de température 9 est une résistance à coefficient de température négatif agencée dans un boitier (non représenté sur les figures) et plaquée sur le corps 11 par un ressort 14. Le capteur de température 9 est agencé sur le cylindre de diamètre DC. La tubulure d'extrémité de sortie d'eau 22 est déformée vers l'intérieur du cylindre pour définir une distance E (Fig. 5) entre une paroi externe 25 de la tubulure d'extrémité de sortie d'eau 22 et le capteur de température 9 égale à 2 mm (Fig.5). Le corps 11 présente donc à l'endroit où est implanté le capteur de température 9 une paroi affinée entre la paroi externe 25 de la tubulure d'extrémité de sortie d'eau 22 et le capteur de température 9.

L'élément chauffant 30 est une résistance électrique blindée ayant une puissance comprise entre 1200 et 1500 W. L'élément chauffant 30 comporte deux terminaisons 31, 32 qui sont rectilignes et saillantes par rapport au corps 11 de la chaudière 10. Les deux terminaisons 31, 32 se trouvent en partie supérieure du corps 11 de la chaudière 10. L'élément chauffant 30 se trouve disposé vers la périphérie du corps 11, sa longueur étant comprise entre 400 et 600 mm de manière à ce qu'il puisse assurer une bonne répartition de la température à l'intérieur du corps 11. A titre d'exemple, on choisit un diamètre extérieur de 56 mm.

Tel que représenté schématiquement à la figure 6, l'élément chauffant 30 est formé, dans un premier temps, dans un plan PS, divisé en deux demi plans PS1, PS2 par un axe de symétrie AS. L'élément chauffant 30 présente une première portion 33 dans le demi plan PS1 qui comprend une succession de deux boucles 35a, 35b qui forment sensiblement un S. Une extrémité supérieure 36 de la forme en S s'étend radialement et à l'opposé de l'axe de symétrie AS pour former la terminaison 31. Une extrémité inférieure 37 de la forme en S s'étend jusqu'à l'axe de symétrie AS pour être reliée à une deuxième portion 34 agencée dans le demi plan PS2, symétrique de la première portion 33 par rapport à l'axe de symétrie AS.

Dans un deuxième temps, l'élément chauffant 30 ainsi formé est enroulé autour d'un cylindre présentant un diamètre DE pour être agencé autour du conduit d'eau 20 qui est inscrit dans un cylindre de diamètre DC (Fig. 3 à 5). Ainsi mis en forme, l'élément chauffant 30 comporte un plan de symétrie P (Fig. 3 et 5) qui comprend l'axe longitudinal V et qui passe par le capteur de température 9. Les terminaisons 31, 32 de l'élément chauffant 30 sont orientées selon la tangente au diamètre DE. Dans un plan de projection perpendiculaire à l'axe longitudinal V, le capteur de température 9 est agencé de manière centrée entre les terminaisons 31, 32 de l'élément chauffant 30 (Fig.5).

Un tel agencement de l'élément chauffant 30 permet de définir autour du capteur de température 9 une zone circulaire 8 périphérique de diamètre D (fig.3) exempte d'élément chauffant 20, le diamètre D étant égal au diamètre DC.

Le corps 11 comporte au centre, le long de l'axe longitudinal V, une ouverture de passage d'une tige d'un mécanisme d'éjection d'un plateau-filtre supportant la mouture de café (non représentés sur les figures). Un tel mécanisme d'éjection est décrit dans le document WO 99/12455.

En fonctionnement, lorsque l'utilisateur veut réaliser un café, l'élément chauffant 30 est alimenté électriquement pour porter le corps 11 et le conduit d'eau 20 à une température prédéterminée mesurée par le capteur de température 9, par exemple une température prédéterminée de 105°C. L'eau froide issue du réservoir 2, qui est poussée par une pompe 3 dans la chaudière 10, arrive à la tubulure d'extrémité d'entrée d'eau 21 et elle se réchauffe en parcourant, en sens ascendant, le conduit d'eau 20 sur toute sa longueur jusqu'à la tubulure d'extrémité de sortie d'eau 22 puis à l'intérieur de la chambre d'infusion 15. La pompe 3 ajuste le débit d'eau froide à partir de la température mesurée par le capteur de température 9 de manière à ce que l'eau arrive à la tubulure d'extrémité de sortie d'eau 22 à une température proche de 100°C. Le capteur de température 9 est implanté dans une zone exempte d'élément chauffant 30 suffisamment importante pour que le capteur de température 9 mesure la température de l'eau circulant dans le conduit d'eau 20 en étant peu influencé par les calories émises par l'élément chauffant 30. Une eau chauffée à une température proche de 100°C permet une bonne infusion du café lorsqu'elle traverse la mouture de café à l'intérieur de la chambre d'infusion 15. L'infusion obtenue s'écoule à l'extérieur de la machine à café 1, dans une tasse, par un canal d'évacuation 6 prévu dans le piston presseur 5.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention défini par les revendications.

Dans une variante de réalisation non illustrée, la chaudière comporte deux éléments chauffants agencés sur le cylindre de diamètre DE, de part et d'autre du capteur de température.

## Revendications

1. Machine de préparation de boissons (1) infusées comportant des moyens de pompage (3) d'eau à partir d'un réservoir (2) pour l'envoyer à travers une chaudière (10) instantanée dans une chambre d'infusion (15) contenant un produit à infuser, puis l'évacuer sous forme d'infusion à l'extérieur de ladite chambre d'infusion (15), ladite chaudière (10) comportant un corps (11) cylindrique intégrant un élément chauffant (30) électrique et un conduit d'eau (20), ledit conduit d'eau (20) formant une hélice s'inscrivant dans un cylindre de diamètre DC, enroulée autour et le long d'un axe longitudinal (V) du corps (11), ledit élément chauffant (30) étant formé autour d'une surface de révolution d'axe longitudinal (V), ladite surface de révolution étant agencée autour du conduit d'eau (20), **caractérisée en ce qu'**elle comporte un capteur de température (9) agencé sur le corps (11), à proximité d'une tubulure d'extrémité de sortie d'eau (22) du conduit d'eau (20) qui débouche dans un fond (16) de la chambre d'infusion (15) et **en ce que** le capteur de température (9) est entouré par une zone circulaire (8) périphérique de diamètre D exempte d'élément chauffant (30), le diamètre D étant supérieur à ½ DC, de préférence supérieur à ¾ DC.

2. Machine de préparation de boissons (1) selon la revendication 1, **caractérisée en ce que** le capteur de température (9) est agencé sur le cylindre de diamètre DC.

3. Machine de préparation de boissons (1) selon l'une quelconque des revendications 1 à 2, **caractérisée en ce que** la distance E entre une paroi externe (25) de la tubulure d'extrémité de sortie d'eau (22) et le capteur de température (9) est inférieure à 5 millimètres, de préférence inférieure à 3 millimètres.

4. Machine de préparation de boissons (1) selon l'une quelconque des revendications 1 à 3, **caractérisée en ce que** la surface de révolution autour de laquelle l'élément chauffant (30) est formé est un cylindre de diamètre DE.

5. Machine de préparation de boissons (1) selon l'une quelconque des revendications 1 à 4, **caractérisée en ce que** l'élément chauffant (30) comporte un plan de symétrie P qui comprend l'axe longitudinal (V) et qui passe par le capteur de température (9).

6. Machine de préparation de boissons (1) selon la revendication 5, **caractérisée en ce que** le plan P ne coupe qu'une seule fois l'élément chauffant (30).

7. Machine de préparation de boissons (1) selon l'une quelconque des revendications 1 à 6, **caractérisée en ce que** des terminaisons de l'élément chauffant sont agencées dans un plan perpendiculaire à l'axe longitudinal (V) situé à proximité de la cuve.

8. Machine de préparation de boissons (1) selon l'une quelconque des revendications 1 à 7, **caractérisée en ce que** le conduit d'eau (20) est un tube métallique qui est surmoulé avec l'élément chauffant (30), pour former le corps (11) de la chaudière (10).

9. Machine de préparation de boissons (1) selon la revendication 8, **caractérisée en ce que** la chambre d'infusion (15) comporte un corps (17) qui est agencé dans le prolongement du corps (11) de la chaudière (10), ledit corps (11) de la chaudière (10) et le corps (17) de la chambre d'infusion (15) étant monobloc.

## Patentansprüche

1. Maschine zur Zubereitung von Brühgetränken (1), die Mittel zum Pumpen (3) von Wasser aus einem Tank (2) umfasst, um dieses durch einen Durchlauferhitzer (10) in eine Brühkammer (15) zu befördern, welche ein aufzubrühendes Produkt enthält, und es anschließend in Form eines Gebühs aus der Brühkammer (15) herauszuleiten, wobei der Erhitzer (10) einen zylindrischen Körper (11) umfasst, der ein elektrisches Heizelement (30) und eine Wasserleitung (20) beinhaltet, wobei die Wasserleitung (20) eine einem Zylinder mit Durchmesser DC entsprechende Spirale bildet, die um und entlang einer Längsachse (V) des Körpers (11) gewickelt ist, wobei das Heizelement (30) um eine rotationssymmetrische Fläche mit der Längsachse (V) gebildet ist, wobei die rotationssymmetrische Fläche um die Wasserleitung (20) angeordnet ist, **dadurch gekennzeichnet, dass** sie einen Temperatursensor (9) umfasst, der am Körper (11) in der Nähe eines Wasserauslauf-Endstutzens (22) der Wasserleitung (20) angeordnet ist, der in einen Boden (16) der Brühkammer (15) mündet, und dadurch, dass der Temperatursensor (9) von einem umlaufenden kreisförmigen Bereich (8) mit Durchmesser D umgeben ist, der kein Heizelement (30) enthält, wobei der Durchmesser D größer als ½ DC, vorzugsweise größer als % DC ist.

2. Getränkezubereitungsmaschine (1) nach Anspruch 1, **dadurch gekennzeichnet, dass** der Temperatursensor (9) am Zylinder mit Durchmesser DC angeordnet ist.

3. Getränkezubereitungsmaschine (1) nach einem der Ansprüche 1 bis 2, **dadurch gekennzeichnet, dass** der Abstand E zwischen einer Außenwand (25) des Wasserauslauf-Endstutzens (22) und dem Temperatursensor (9) kleiner als 5 Millimeter, vorzugsweise kleiner als 3 Millimeter ist.

4. Getränkezubereitungsmaschine (1) nach einem der Ansprüche 1 bis 3, **dadurch gekennzeichnet, dass** es sich bei der rotationssymmetrischen Fläche, um die das Heizelement (30) gebildet ist, um einen Zylinder mit Durchmesser DE handelt.

5. Getränkezubereitungsmaschine (1) nach einem der Ansprüche 1 bis 4, **dadurch gekennzeichnet, dass** das Heizelement (30) eine Symmetrieebene P umfasst, die die Längsachse (V) umfasst und die durch den Temperatursensor (9) verläuft.

6. Getränkezubereitungsmaschine (1) nach Anspruch 5, **dadurch gekennzeichnet, dass** die Ebene P das Heizelement (30) nur einmal schneidet.

7. Getränkezubereitungsmaschine (1) nach einem der Ansprüche 1 bis 6, **dadurch gekennzeichnet, dass** Endstücke des Heizelements in einer zur Längsachse (V) senkrechten Ebene angeordnet sind, die in der Nähe des Behälters liegt.

8. Getränkezubereitungsmaschine (1) nach einem der Ansprüche 1 bis 7, **dadurch gekennzeichnet, dass** es sich bei der Wasserleitung (20) um ein Metallrohr handelt, das mit dem Heizelement (30) umformt ist, um den Körper (11) des Erhitzers (10) zu bilden.

9. Getränkezubereitungsmaschine (1) nach Anspruch 8, **dadurch gekennzeichnet, dass** die Brühkammer (15) einen Körper (17) umfasst, der in der Verlängerung des Körpers (11) des Erhitzers (10) angeordnet ist, wobei der Körper (11) des Erhitzers (10) und der Körper (17) der Brühkammer (15) einstückig sind.

## Claims

1. Machine for preparing infused beverages (1) comprising means for pumping (3) water from a reservoir (2) to send it through a boiler (10) instantly into an infusion chamber (15) containing a product to be infused, then discharge it in the form of infusion to the outside of said infusion chamber (15), said boiler (10) comprising a cylindrical body (11) integrating an electric heating element (30) and a water conduit (20), said water conduit (20) forming a helix falling within a cylinder of diameter DC, wound around and along a longitudinal axis (V) of the body (11), said heating element (30) being formed around a revolution surface of longitudinal axis (V), said revolution surface being arranged around the water duct (20), **characterised in that** it comprises a temperature sensor (9) arranged on the body (11), in the proximity of an end tube for exiting water (22) from the water conduit (20) which opens into a bottom (16) of the infusion chamber (15) and **in that** the temperature sensor (9) is surrounded by a peripheral circular zone (8) of diameter D with no heating element (30), the diameter D being greater than ½ DC, preferably greater than % DC.

2. Machine for preparing beverages (1) according to claim 1, **characterised in that** the temperature sensor (9) is arranged on the cylinder of diameter DC.

3. Machine for preparing beverages (1) according to any one of claims 1 to 2, **characterised in that** the distance E between an outer wall (25) of the end tube for exiting water (22) and the temperature sensor (9) is less than 5 millimetres, preferably less than 3 millimetres.

4. Machine for preparing beverages (1) according to any one of claims 1 to 3, **characterised in that** the revolution surface around which the heating element (30) is formed, is a cylinder of diameter DE.

5. Machine for preparing beverages (1) according to any one of claims 1 to 4, **characterised in that** the heating element (30) comprises a symmetrical plane P which comprises the longitudinal axis (V) and which passes through the temperature sensor (9).

6. Machine for preparing beverages (1) according to claim 5, **characterised in that** the plane P only cuts the heating element (30) once.

7. Machine for preparing beverages (1) according to any one of claims 1 to 6, **characterised in that** the ends of the heating element are arranged in a plane perpendicular to the longitudinal axis (V) located in the proximity of the tank.

8. Machine for preparing beverages (1) according to any one of claims 1 to 7, **characterised in that** the water conduit (20) is a metal tube which is overmoulded with the heating element (30), to form the body (11) of the boiler (10).

9. Machine for preparing beverages (1) according to claim 8, **characterised in that** the infusion chamber (15) comprises a body (17) which is arranged in the extension of the body (11) of the boiler (10), said body (11) of the boiler (10) and the body (17) of the infusion chamber (15) being one-piece.
